# NEUE EUROPÄISCHE PATENTSCHRIFT

(11) **EP 3 560 975 B2**
(45) Veröffentlichungstag und Bekanntmachung des Hinweises auf die Entscheidung über den Einspruch: **06.12.2023**
(45) Hinweis auf die Patenterteilung: 07.04.2021
(21) Anmeldenummer: 18169340.9
(22) Anmeldetag: 25.04.2018
(51) Int. Cl.: C08G 18/79, C08G 18/80, C08G 18/08, C08G 18/28, C09D 175/08

(54) **IONISCH HYDROPHILIERTE POLYISOCYANATE UND ANTIOXIDANTIEN**
IONICALLY HYDROPHILIZED POLYISOCYANATES AND ANTIOXIDANTS
POLYISOCYANATES ET ANTIOXYGÈNES HYDROPHILISÉS IONIQUES

(43) Veröffentlichungstag der Anmeldung: 30.10.2019
(73) Patentinhaber: Covestro Intellectual Property GmbH & Co. KG, 51373 Leverkusen (DE)
(72) Erfinder: LAAS, Hans-Josef, 51519 Odenthal (DE)
(74) Vertreter: Levpat

(56) Entgegenhaltungen:
- WO-A1-01/88006
- WO-A1-2004/058847
- WO-A1-2017/042111
- WO-A1-2018/056408
- WO-A1-2018/070371
- DE-A1-102005 057 682
- JP-A- 2007 231 100
- US-A1- 2012 101 210

## Beschreibung

Die Erfindung betrifft ein Verfahren zur Herstellung Sulfonatgruppen enthaltender Polyisocyanate.

Wässrige Lacksysteme haben sich heute für verschiedene Anwendungsbereiche als umweltfreundliche Alternative zu lösemittelhaltigen Beschichtungsmitteln fest etabliert. Eine besondere Rolle als Rohstoff für qualitativ hochwertige wässrige Lacke spielen dabei hydrophil-modifizierte Polyisocyanate, da sie als wasserdispergierbare Vernetzerkomponenten die Formulierung wässriger Zweikomponenten-Polyurethan(2K-PUR)-Lacke ermöglichen. Eine sehr einfache Methode zur Herstellung wasserdispergierbarer Polyisocyanate ist beispielsweise die anteilige Umsetzung hydrophober Polyisocyanate mit hydrophilen Polyetheralkoholen (siehe z. B. EP-A 0 959 087, Seite 2, Zeilen 25 - 46). Polyether-modifizierte Polyisocyanate weisen jedoch den prinzipiellen Nachteil auf, dass der für eine ausreichende Dispergierbarkeit bei einem Einsatz als Vernetzer in wässrigen 2K-PUR-Lacken erforderliche hohe Polyethergehalt den erhaltenen Beschichtungen eine permanente Hydrophilie verleiht.

Zur Umgehung dieses Nachteils wurde auch bereits versucht, durch Einbau ionischer Gruppen, insbesondere Sulfonatgruppen, hydrophil modifizierte, selbstdispergierbare Polyisocyanate herzustellen.

EP 703 255 beschreibt beispielsweise wasseremulgierbare Polyisocyanate mit aliphatisch, cycloaliphatisch oder aromatisch gebundenen NCO-Gruppen, die durch Umsetzung mit Sulfonatgruppen aufweisenden Verbindungen hydrophil modifiziert sind, als Zusatzmittel für wäßrige Dispersionen. Als geeignete Hydrophilierungsbausteine werden in dieser Veröffentlichung Hydroxy- oder Aminosulfonsäuren, besonders solche mit aliphatisch gebundenen OH-Gruppen, wie z. B. Hydroxyethan- bzw. Hydroxypropansulfonsäure, oder Polyethersulfonate, z. B. Tegomer^{®}-Polyether (Fa. Goldschmidt) genannt. US 2012/101210 beschreibt wässrige 2-Komponenten PUR Beschichtungszusammensetzungen. DE 102005057682 beschreibt strahlungshärtbare wasseremulgierbare Polyisocyanate. WO 2009/010469 beschreibt die Verwendung von aromatischen Sulfonsäuren, die genau eine primäre oder sekundäre Aminogruppe tragen und ein spezielles Substitutionsmuster aufweisen, in Kombination mit monofunktionellen Polyetheralkoholen zur Hydrophilierung von Di- oder Polyisocyanaten. Gegenstand der US 2009/0209711 sind ebenfalls ionisch/nichtionisch-modifizierte wasserdispergierbare Polyisocyanate, hergestellt unter Verwendung hydrophiler Methoxypolyethylenglykole, spezieller hydrophober Polyetheralkohole und Alkali-neutralisierter Sulfonatgruppen enthaltender Polyesteralkohole.

JP 2015-205957 und JP 2016-017157 beschreiben hydroxyfunktionelle Sulfonsäure-Ammoniumsalze, vorzugsweise solche auf Basis von Hydroxyethansulfonsäure, Hydroxypropansulfonsäure oder Hydroxymethylbenzolsulfonsäure, die als Neutralisationsamin tertiäre Amine mit mindestens einem cyclischen Substituenten enthalten, und deren Umsetzungsprodukte mit aliphatischen, cycloaliphatischen oder araliphatischen Polyisocyanaten.

Nach der Lehre der WO 2001/88006 lassen sich durch Umsetzung beliebiger Polyisocyanate mit 2-(Cyclohexylamino)-ethansulfonsäure (CHES) oder 3-(Cyclohexylamino)-propansulfonsäure (CAPS) hydrophilierte Polyisocyanate erhalten, die als Vernetzer in wäßrigen Lacksystemen zu Beschichtungen hoher Härte sowie ausgezeichneter Lösemittel- und Chemikalienbeständigkeit führen.

EP 3 045 485 A1 beschreibt die Verwendung weiterer am Stickstoff mit Cycloaliphaten substituierter Aminopropan-, Aminobutan- und/oder Aminoisobutansulfonsäuren als Hydrophilierungsmittel für Polyisocyanate.

Es ist bekannt, dass Sulfonsäuregruppen in Gegenwart von Wasser entziehenden Verbindungen, wie sie Isocyanate darstellen, untereinander zu Sulfonsäureanhydriden oder auch mit Isocyanatgruppen zu gemischten Anhydriden aus Sulfonsäuren und Carbaminsäuren, sogenannten Carbamoylsulfonaten, abreagieren können. Bei den vorstehend beschriebenen Verfahren zur Herstellung Sulfonatgruppen enthaltender Polyisocyanatvernetzer führen diese Nebenreaktionen immer zu einem Anstieg der Viskosität, reduzieren gleichzeitig die Anzahl der Hydrophilie verleihenden Säuregruppen und verringern damit die Emulgierfähigkeit der Reaktionsprodukte.

Dem Fachmann ist darüberhinaus bekannt, dass der Einbau von Sulfonsäure- bzw. Sulfonatgruppen in Polyisocyanate häufig zu einer Verschlechterung der Farbzahl führt.

Für die Formulierung wässriger Zweikomponenten-Polyurethan-Lacke höchster Qualität werden vom Markt aber gerade farbhelle Polyisocyanatvernetzer möglichst niedriger Viskosität und hoher Hydrophilie gefordert, die sich leicht in die wässrige Phase einrühren lassen.

Aufgabe der vorliegenden Erfindung war es daher, Sulfonatgruppen enthaltende Polyisocyanate zur Verfügung zu stellen, die gegenüber den bisher bekannten eine deutlich reduzierte Farbzahl, niedrigere Viskositäten und gleichzeitig eine verbesserte Einarbeitbarkeit in wässrige Systeme aufweisen.

Diese Aufgabe konnte jetzt mit den nachfolgend näher beschriebenen Verfahren zur Herstellung Sulfonatgruppen enthaltender Polyisocyanate gelöst werden. Die vorliegende Erfindung beruht auf der überraschenden Beobachtung, dass die Umsetzung von Polyisocyanaten mit Sulfonsäure- bzw. Sulfonatgruppen enthaltenden Verbindungen, die eine oder mehrere Mercaptooder Aminogruppen tragen, Produkte mit deutlich geringerer Farbe liefert, wenn die Reaktion in Gegenwart üblicher Antioxidantien durchgeführt wird. Besonders überraschend war es, dass die unter Mitverwendung von Antioxidantien hergestellten hydrophilen Polyisocyanate im direkten Vergleich zu analog aufgebauten Sulfonatgruppen enthaltenden Polyisocyanaten, wie sie nach den bisher bekannten Herstellverfahren des Standes der Technik ohne Mitverwendung von Antioxidantien erhältlich waren, höhere Isocyanatgehalte, niedrigere Viskositäten und eine bessere Emulgierbarkeit zeigen.

Gegenstand der vorliegenden Erfindung ist ein Verfahren zur Herstellung Sulfonatgruppen enthaltender Polyisocyanate, umfassend eine Umsetzung von
A) mindestens einer Polyisocyanatkomponente mit aliphatisch, cycloaliphatisch, araliphatisch und/oder aromatisch gebundenen Isocyanatgruppen mit
B) mindestens einer, mindestens eine Mercapto- oder Aminogruppe tragenden organischen Verbindung, die eine oder mehrere Sulfonsäure- und/oder Sulfonatgruppen aufweist, wobei die Sulfonsäuregruppen zumindest anteilig während und/oder im Anschluß an die Umsetzung von A) mit B) neutralisiert werden, und gegebenenfalls
C) weiteren nichtionisch hydrophilen oder hydrophoben organischen Verbindungen, die mindestens eine gegenüber Isocyanaten reaktive Gruppe aufweisen,
dadurch gekennzeichnet,
dass die Umsetzung der Polyisocyanatkomponente A) mit der organischen Verbindung B) in Gegenwart mindestens eines Antioxidans D) durchgeführt wird.

Erhalten werden können mittels des erfindungsgemäßen Verfahrens Sulfonatgruppen enthaltenden Polyisocyanate sowie ihre Verwendung als Ausgangskomponenten bei der Herstellung von Polyurethankunststoffen, insbesondere als Vernetzer für wasserlösliche oder -dispergierbare Lackbindemittel oder Lackbindemittelkomponenten mit gegenüber Isocyanatgruppen reaktionsfähigen Gruppen bei der Herstellung von Beschichtungen unter Verwendung von wässrigen Beschichtungsmitteln auf Basis derartiger Bindemittel oder Bindemittelkomponenten.

Bevorzugt bedeuten erfindungsgemäß die Ausdrücke "umfassend" oder "enthaltend", "im Wesentlichen bestehend aus" und besonders bevorzugt "bestehend aus".

Ausgangsverbindungen A) für das erfindungsgemäße Verfahren sind beliebige Diisocyanate und/oder Polyisocyanate mit aliphatisch, cycloaliphatisch, araliphatisch und/oder aromatisch gebundenen Isocyanatgruppen.

Geeignete Diisocyanate A) sind beliebige, auf verschiedene Weise, beispielsweise durch Phosgenierung in der Flüssig- oder Gasphase oder auf phosgenfreien Weg, wie z. B. durch thermische Urethanspaltung, zugängliche Diisocyanate. Bevorzugte Diisocyanate sind solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethyl-pentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Geeignete Polyisocyanate A) sind beliebige, durch Modifizierung einfacher aliphatischer, cycloaliphatischer, araliphatischer und/oder aromatischer Diisocyanate, beispielsweise solcher der vorstehend genannten Art, hergestellte Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beispielhaft beschrieben sind oder um beliebige Gemische solcher Polyisocyanate. Bei der Herstellung dieser Polyisocyanate schließt sich an die eigentliche Modifizierungsreaktion in der Regel ein weiterer Verfahrenschritt zur Abtrennung der nicht umgesetzten überschüssigen monomeren Diisocyanate an. Diese Monomerenabtrennung erfolgt nach an sich bekannten Verfahren vorzugsweise durch Dünnschichtdestillation im Hochvakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan.

Bevorzugt kommen beim erfindungsgemäßen Verfahren als Ausgangskomponente A) Polyisocyanate der genannten Art zum Einsatz, die einen Gehalt an monomeren Diisocyanaten von weniger als 1 Gew.-%, vorzugsweise weniger als 0,5 Gew.-%, besonders bevorzugt von weniger als 0,3 Gew.-% aufweisen. Die Rest-Monomeren Gehalte werden nach DIN EN ISO 10283:2007-11 gaschromatographisch mit internem Standard gemessen.

Besonders bevorzugte Polyisocyanate A) für das erfindungsgemäße Verfahren sind solche der genannten Art mit ausschließlich aliphatisch und/oder cycloaliphatisch gebundenen Isocyanatgruppen.

Ganz besonders bevorzugt sind Polyisocyanate A) auf Basis von PDI, HDI, IPDI und/oder 4,4'-Diisocyanatodicyclohexylmethan.

Die vorstehend als geeignet, bevorzugt, besonders bevorzugt und ganz besonders bevorzugt genannten Polyisocyanate A) enthalten vorzugsweise Isocyanuratstrukturen und weisen eine mittlere NCO-Funktionalität von 2,3 bis 5,0, vorzugsweise von 2,5 bis 4,5, sowie einen Gehalt an Isocyanatgruppen von 6,0 bis 26,0 Gew.-%, vorzugsweise von 8,0 bis 25,0 Gew.-%, besonders bevorzugt 10,0 bis 24,0 Gew.-% auf.

Ausgangsverbindungen B) für das erfindungsgemäße Verfahren sind beliebige organische Verbindungen, die mindestens eine Mercapto- oder Aminogruppe sowie eine oder mehrere Sulfonsäureoder Sulfonatgruppe tragen. Hierbei handelt es sich um an sich bekannte mercapto- oder aminofunktionelle Sulfonsäuren und/oder deren Salze oder um beliebige Gemische solcher Verbindungen. Ausdrücklich nicht zur vorliegenden Erfindung gehörend sind Sulfonsäuren, die eine oder mehrere Hydroxygruppen tragen. Solche hydroxyfunktionellen Sulfonsäuren weisen den Nachteil auf, dass sie in der Regel im Gleichgewicht mit ihrem Anhydrid stehen. Sie stehen insbesondere im technischen Maßstab oftmals nur in Form wässriger Lösungen zur Verfügung, was ihre Verwendung als Aufbaukomponente zur Herstellung modifizierter Polyisocyanate erheblich erschwert.

Geeignete Ausgangsverbindungen B) sind beispielsweise Mercaptosulfonsäuren, wie z. B. 2-Mercaptoethansulfonsäure und 3-Mercaptopropan-1-sulfonsäure und/oder deren Salze.

Als Ausgangskomponente B) geeignete aminofunktionelle Verbindungen sind beispielsweise substituierte aromatische Sulfonsäuren, die bis zu drei Sulfonsäuregruppen tragen können und bis zu drei, bevorzugt bis zu zwei, besonders bevorzugt genau eine primäre oder sekundäre, bevorzugt genau eine primäre Aminogruppe aufweisen, wobei die Positionen am aromatischen Ring in ortho-Stellung zur Aminogruppe unsubstituiert sind.

Bevorzugt handelt es hierbei um substituierte aromatische Sulfonsäuren der allgemeinen Formel (I) 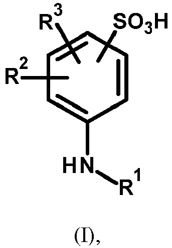 in welcher R¹, R² und R³ unabhängig voneinander für gleiche oder verschiedene Reste stehen und Wasserstoff oder gesättigte oder ungesättigte, lineare oder verzweigte, aliphatische, cycloaliphatische, araliphatische oder aromatische organische Reste bedeuten, die zusätzlich Heteroatome in der Kette aufweisen können, wobei R² und R³ auch in Kombination untereinander zusammen einen Ring, bevorzugt einen annellierten aromatischen Ring bilden können, mit der Maßgabe, daß mindestens einer der Reste R² und R³ ungleich Wasserstoff ist.

Aliphatische oder araliphatische Reste R¹, R² und R³ sind in Formel (I) vorzugsweise solche mit 1 bis 18 Kohlenstoffatome, wie z. B. ein Methyl-, Ethyl-, Propyl-, Isopropyl-, n-Butyl-, sec-Butyl-, tert.-Butyl-, Pentyl-, Hexyl-, Heptyl-, Octyl-, 2-Etylhexyl-, 2,4,4-Trimethylpentyl-, Decyl-, Dodecyl-, Tetradecyl-, Hetadecyl-, Octadecyl-, 1,1-Dimethylpropyl-, 1,1-Dimethylbutyl-, 1,1,3,3-Tetramethylbutyl-, Benzyl-, 1-Phenylethyl-, 2-Phenylethyl-, α,α-Dimethylbenzyl-, Benzhydryl-, p-Tolylmethyl-, 1-(p-Butylphenyl)-ethyl-, p-Chlorbenzyl-, 2,4-Dichlorbenzyl-, p-Methoxybenzyl-, m-Ethoxybenzyl-, 2-Cyanoethyl-, 2-Cyanopropyl-, 2-Methoxycarbonethyl-, 2-Ethoxycarbonylethyl-, 2-Butoxycarbonylpropyl-, 1,2-Di(methoxycarbonyl)ethyl-, 2-Methoxyethyl-, 2-Ethoxyethyl-, 2-Butoxyethyl-, Diethoxymethyl-, Diethoxyethyl-, 1,3-Dioxolan-2-yl-, 1,3-Dioxan-2-yl-, 2-Methyl-1,3-dioxolan-2-yl-, 4-Methyl-1,3-dioxolan-2-yl-, 2-Isopropoxyethyl-, 2-Butoxypropyl-, 2-0ctyloxyethyl-, Chlormethyl-, 2-Chlorethyl-, Trichlormethyl-, Trifluormethyl-, 1,1-Dimethyl-2-chlorethyl-, 2-Methoxyisopropyl-, Butylthiomethyl-, 2-Dodecylthioethyl-, 2-Phenylthioethyl-, 2,2,2-Trifluorethyl-, 2-Phenoxyethyl-, 2-Phenoxypropyl-, 3-Phenoxypropyl-, 4-Phenoxybutyl-, 6-Phenoxyhexyl-, 2-Methoxyethyl-, 2-Methoxypropyl-, 3-Methoxypropyl-, 4-Methoxybutyl-, 6-Methoxyhexyl-, 2-Ethoxypropyl-, 3-Ethoxypropyl-, 4-Ethoxybutyl- oder 6-Ethoxyhexylrest.

Cycloaliphatische Reste R¹, R² und R³ sind in Formel (I) vorzugsweise solche mit 5 bis 12 Kohlenstoffatome, wie z. B. ein Cyclopentyl-, Cyclohexyl-, Cyclooctyl-, Cyclododecyl-, Methylcyclopentyl-, Dimethylcyclopentyl-, Methylcyclohexyl-, Dimethylcyclohexyl-, Diethylcyclohexyl-, Butylcyclohexyl-, Methoxycyclohexyl-, Dimethoxycyclohexyl-, Diethoxycyclohexyl-, Butylthiocyclohexyl-, Chlorcyclohexyl-, Dichlorcyclohexyl-, Dichlorcyclopentylrest sowie gesättigte oder ungesättigte bicyclische Systeme wie z. B. ein Norbornyl- oder ein Norbornenylrest.

Aromatische Reste R¹, R² und R³ sind in Formel (I) vorzugsweise solche mit 6 bis 12 Kohlenstoffatome, wie z. B. ein Phenyl-, Tolyl-, Xylyl-, o-Naphthyl-, β-Naphthyl-, 4-Diphenylyl-, Chlorphenyl-, Dichlorphenyl-, Trichlorphenyl-, Difluorphenyl-, Methylphenyl-, Dimethylphenyl-, Trimethylphenyl-, Ethylphenyl-, Diethylphenyl-, Isopropylphenyl-, tert.-Butylphenyl-, Dodecylphenyl-, Methoxyphenyl-, Dimethoxyphenyl-, Ethoxyphenyl-, Hexyloxyphenyl-, Methylnaphthyl-, Isopropylnaphthyl-, Chlornaphthyl-, Ethoxynaphthyl-, 2,6-Dimethylphenyl-, 2,4,6-Trimethylphenyl-, 2,6-Dimethoxyphenyl-, 2,6-Dichlorphenyl-, 4-Bromphenyl-, 2- oder 4-Nitrophenyl-, 2,4- oder 2,6-Dinitrophenyl-, 4-Dimethylaminophenyl-, 4-Acetylphenyl-, Methoxyethylphenyl- oder Ethoxymethylphenylrest.

Bilden die Reste R² und R³ in Formel (I) zusammen einen Ring, so stehen R² und R³ vorzugsweise für eine Butyl-1,4-ylenkette oder besonders bevorzugt für eine 1,3-Butadien-1,4-ylenkette, was bedeutet, dass die aromatischen Sulfonsäuren in diesem Fall vorzugsweise eine Tetrahydronaphthalin- oder besonders bevorzugt eine Naphthalinstruktur aufweisen.

Besonders bevorzugt handelt es sich beim Rest R¹ um Wasserstoff, einen Methyl-, Ethyl-, n-Propyl-, Isopropyl-, tert-Butyl-, Cyclopentyl- oder Cyclohexylrest, ganz besonders bevorzugt um Wasserstoff.

Besonders bevorzugt handelt es sich bei den Resten R² und R³ unabhängig voneinander um Wasserstoff, einen Methyl-, Ethyl-, Isopropyl-, tert-Butyl-, Hexyl-, Octyl-, Nonyl-, Decyl-, Dodecyl-, Phenyl- oder Naphthylrest, ganz besonders bevorzugt um Wasserstoff und/oder eine Methylgruppe. Dabei steht bevorzugt einer der Reste R² und R³ für Wasserstoff während der andere ungleich Wasserstoff ist.

Die Sulfonsäuregruppe in Formel (I) steht am aromatischen Ring ebenso wie die Substituenten R² und R³ in para- oder meta-Stellung bezogen auf die primäre bzw. sekundäre Aminogruppe, die Sulfonsäuregruppe steht dabei bevorzugt in meta-Stellung.

Geeignete aromatische Aminosulfonsäuren der allgemeinen Formel (I) sind beispielsweise 4-Aminotoluol-2-sulfonsäure, 5-Aminotoluol-2-sulfonsäure oder 2-Aminonaphthalin-4-sulfonsäure, besonders bevorzugt ist 4-Aminotoluol-2-sulfonsäure.

Weitere Ausgangsverbindungen B) für das erfindungsgemäße Verfahren sind daneben auch aminofunktionelle Sulfonsäuren der allgemeinen Formel (II) 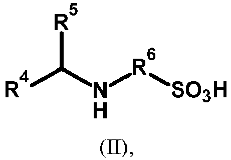 in welcher R⁴ und R⁵ unabhängig voneinander für gleiche oder verschiedene Reste stehen und Wasserstoff oder gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen, wobei R⁴ und R⁵ auch in Kombination untereinander und gegebenenfalls mit einem weiteren Stickstoffatom oder einem Sauerstoffatom cycloaliphatische oder heterocyclische Ringe mit 3 bis 8 Kohlenstoffatomen bilden können, die gegebenenfalls weiter substituiert sein können, und R⁶ für einen linearen oder verzweigten aliphatischen Rest mit 2 bis 6 Kohlenstoffatomen steht.

Vorzugsweise stehen in der allgemeinen Formel (11) R⁴ und R⁵ unabhängig voneinander für gesättigte, lineare oder verzweigte, aliphatische oder cycloaliphatische organische Reste mit 1 bis 8 Kohlenstoffatomen, die auch in Kombination untereinander cycloaliphatische Ringe bilden können, und R⁶ für einen linearen oder verzweigten aliphatischen Rest mit 2 bis 4 Kohlenstoffatomen.

Geeignete Aminosulfonsäuren der allgemeinen Formel (II) sind beispielsweise 2-Aminoethansulfonsäure, 3-Aminopropan-1-sulfonsäure, 4-Aminobutan-1-sulfonsäure, 3-Aminobutan-1-sulfonsäure, 3-Amino-2-methylpropan-1-sulfonsäure, 4-Aminobutan-2-sulfonsäure, 2-Methylaminoethan-l-sulfonsäure, 2-Ethylaminoethan-1-sulfonsäure, 2-Propylaminoethan-1-sulfonsäure, 2-Isopropylaminoethan-1-sulfonsäure, 2-n-Butylaminoethan-1-sulfonsäure, 2-(tert-Butyl)aminoethan-1-sulfonsäure, 2-Pentylaminoethan-1-sulfonsäure, 2-Hexylaminoethan-1-sulfonsäure, 2-Octylaminoethan-1-sulfonsäure, 2-Anilinoethan-1-sulfonsäure, 2-Cyclopropylaminoethan-1-sulfonsäure, 2-Cyclobutylaminoethan-1-sulfonsäure, 2-Cyclopentylaminoethan-1-sulfonsäure, 2-Cyclohexylaminoethan-1-sulfonsäure, die isomeren 2-(Methylcyclohexyl)aminoethan-1-sulfonsäuren, 2-(2,3-Dimethylcyclohexyl)aminoethan-1-sulfonsäure, 2-(3,3,5-Trimethylcyclohexylaminoethan-1-sulfonsäure, 2-(4-tert-Butylcyclohexyl)aminoethan-1-sulfonsäure, 2-Cycloheptylaminoethan-1-sulfonsäure, 2-Cyclooctylaminoethan-1-sulfonsäure, 2-(2-Norbornyl)aminoethan-1-sulfonsäure, 2-(1-Adamantyl)aminoethan-1-sulfonsäure, 2-(3,5-Dimethyl-1-adamantyl)aminoethan-1-sulfonsäure, 3-Methylaminopropan-1-sulfonsäure, 3-Ethylaminopropan-1-sulfonsäure, 3-Propylaminopropan-1-sulfonsäure, 3-Isopropylaminopropan-1-sulfonsäure, 3-n-Butylaminopropan-1-sulfonsäure, 3-(tert-Butyl)aminopropan-1-sulfonsäure, 3-Pentylaminopropan-1-sulfonsäure, 3-Hexylaminopropan-1-sulfonsäure, 3-Octylaminopropan-1-sulfonsäure, 3-Anilinopropan-1-sulfonsäure, 3-Cyclopropyl-aminopropan-1-sulfonsäure, 3-Cyclobutylaminopropan-1-sulfonsäure, 3-Cyclopentylaminopropan-1-sulfonsäure, 3-Cyclohexylaminopropan-1-sulfonsäure, die isomeren 3-(Methylcyclohexyl)aminopropan-1-sulfonsäuren, 3-(2,3-Dimethylcyclohexyl)aminopropan-1-sulfonsäure, 3-(3,3,5-Trimethylcyclohexylaminopropan-1-sulfonsäure, 3-(4-tert-Butylcyclohexyl)aminopropan-1-sulfonsäure, 3-Cycloheptylaminopropan-1-sulfonsäure, 3-Cyclooctylaminopropan-1-sulfonsäure, 3-(2-Norbornyl)aminopropan-1-sulfonsäure, 3-(1-Adamantyl)aminopropan-1-sulfonsäure, 3-(3,5-Dimethyl-1-adamantyl)aminopropan-1-sulfonsäure, 3-Methylaminobutan-1-sulfonsäure, 3-Ethylaminobutan-1-sulfonsäure, 3-Propylaminobutan-1-sulfonsäure, 3-Isopropylaminobutan-1-sulfonsäure, 3-n-Butylaminobutan-1-sulfonsäure, 3-(tert-Butyl)aminobutan-1-sulfonsäure, 3-Pentylaminobutan-1-sulfonsäure, 3-Hexylaminobutan-1-sulfonsäure, 3-Octylaminobutan-1-sulfonsäure, 3-Anilinobutan-1-sulfonsäure, 3-Cyclopropylaminobutan-1-sulfonsäure, 3-Cyclobutylaminobutan-1-sulfonsäure, 3-Cyclopentylaminobutan-1-sulfonsäure, 3-Cyclohexylaminobutan-1-sulfonsäure, die isomeren 3-(Methylcyclohexyl)aminobutan-1-sulfonsäuren, 3-(2,3-Dimethylcyclohexyl)aminobutan-1-sulfonsäure, 3-(3,3,5-Trimethylcyclohe-xylaminobutan-1-sulfonsäure, 3-(4-tert-Butylcyclohexyl)aminobutan-1-sulfonsäure, 3-Cycloheptylaminobutan-1-sulfonsäure, 3-Cyclooctylaminobutan-1-sulfonsäure, 3-(2-Norbornyl)aminobutan-1-sulfonsäure, 3-(1-Adamantyl)aminobutan-1-sulfonsäure, 3-(3,5-Dimethyl-1-adamantyl)aminobutan-1-sulfonsäure, 4-Methylaminobutan-1-sulfonsäure, 4-Ethylaminobutan-1-sulfonsäure, 4-Propylaminobutan-1-sulfonsäure, 4-Isopropylaminobutan-1-sulfonsäure, 4-n-Butylaminobutan-1-sulfonsäure, 4-(tert-Butyl)aminobutan-1-sulfonsäure, 4-Pentylaminobutan-1-sulfonsäure, 4-Hexylaminobutan-1-sulfonsäure, 4-Octylaminobutan-1-sulfonsäure, 4-Anilinobutan-1-sulfonsäure, 4-Cyclopropylaminobutan-1-sulfonsäure, 4-Cyclobutylaminobutan-1-sulfonsäure, 4-Cyclopentylaminobutan-1-sulfonsäure, 4-Cyclohexylami-nobutan-1-sulfonsäure, die isomeren 4-(Methylcyclohexyl)aminobutan-1-sulfonsäuren, 4-(2,3-Dimethylcyclohexyl)aminobutan-1-sulfonsäure, 4-(3,3,5-Trimethylcyclohexylaminobutan-1-sulfonsäure, 4-(4-tert-Butylcyclohexyl)aminobutan-1-sulfonsäure, 4-Cycloheptylaminobutan-1-sulfonsäure, 4-Cyclooctylaminobutan-1-sulfonsäure, 4-(2-Norbornyl)aminobutan-1-sulfonsäure, 4-(1-Adamantyl)aininobutan-1-sulfonsäure, 4-(3,5-Dimethyl-1-adamantyl) aminobutan-1-sulfonsäure, 3-Methylamino-2-methyl-propan-1-sulfonsäure, 3-Ethylamino-2-methyl-propan-1-sulfonsäure, 3-Propylamino-2-methyl-propan-1-sulfonsäure, 3-Isopropylamino-2-methyl-propan-1-sulfonsäure, 3-n-Butylamino-2-methyl-propan-1-sulfonsäure, 3-(tert-Butyl)amino-2-methyl-propan-1-sulfonsäure, 3-Pentylamino-2-methyl-propan-1-sulfonsäure, 3-Hexylamino-2-methyl-propan-1-sulfonsäure, 3-Octylamino-2-methyl-propan-1-sulfonsäure, 3-Anilino-2-methyl-propan-1-sulfonsäure, 3-Cyclopropylamino-2-methyl-propan-1-sulfonsäure, 3-Cyclobutylamino-2-methyl-propan-1-sulfonsäure, 3-Cyclopentylamino-2-methyl-propan-1-sulfonsäure, 3-Cyclohexylamino-2-methyl-propan-1-sulfonsäure, die isomeren 3-(Methylcyclohexyl)amino-2-methyl-propan-1-sulfonsäuren, 3-(2,3-Dimethylcyclohexyl)amino-2-methyl-propan-l-sulfonsäure, 3-(3,3,5-Trimethyl-cyclohexylamino-2-methyl-propan-1-sulfonsäure, 3-(4-tert-Butylcyclohexyl)amino-2-methyl-propan-1-sulfonsäure, 3-Cycloheptylamino-2-methyl-propan-1-sulfonsäure, 3-Cyclooctylamino-2-methyl-propan-1-sulfonsäure, 3-(2-Norbornyl)amino-2-methyl-propan-1-sulfonsäure, 3-(1-Adamantyl)amino-2-methyl-propan-1-sulfonsäure, 3-(3,5-Dimethyl-1-adamantyl)amino-2-methyl-propan-1-sulfonsäure, 3-Methylaminobutan-2-sulfonsäure, 3-Ethylaminobutan-2-sulfonsäure, 3-Propylaminobutan-2-sulfonsäure, 3-Isopropylaminobutan-2-sulfonsäure, 3-n-Butylaminobutan-2-sulfonsäure, 3-(tert-Butyl)aminobutan-2-sulfonsäure, 3-Pentylaminobutan-2-sulfonsäure, 3-Hexylaminobutan-2-sulfonsäure, 3-Octylaminobutan-2-sulfonsäure, 3-Anilinobutan-2-sulfonsäure, 3-Cyclopropylaminobutan-2-sulfonsäure, 3-Cyclobutylaminobutan-2-sulfonsäure, 3-Cyclopentylaminobutan-2-sulfonsäure, 3-Cyclohexylaminobutan-2-sulfonsäure, die isomeren 3-(Methylcyclohexyl)aminobutan-2-sulfonsäuren, 3-(2,3-Dimethylcyclohexyl)aminobutan-2-sulfonsäure, 3-(3,3,5-Trimethylcyclohexylaminobutan-2-sulfonsäure, 3-(4-tert-Butylcyclohe-xyl)aminobutan-2-sulfonsäure, 3-Cycloheptylaminobutan-2-sulfonsäure, 3-Cyclooctylaminobutan-2-sulfonsäure, 3-(2-Norbornyl)aminobutan-2-sulfonsäure, 3-(1-Adamantyl)amino-2-sulfonsäure und 3-(3,5-Dimethyl-1-adamantyl)aminobutan-2-sulfonsäure.

Besonders bevorzugte Aminosulfonsäuren B) für das erfindungsgemäße Verfahren sind solche der allgemeinen Formel (II), in welcher keiner der Reste R⁴ und R⁵ für Wasserstoff steht.

Ganz besonders bevorzugte Aminosulfonsäuren B) sind 2-Isopropylaminoethan-1-sulfonsäure, 3-Isopropylaminopropan-1-sulfonsäure, 4-Isopropylaminobutan-1-sulfonsäure, 2-Cyclohexylaminoethan-l-sulfonsäure, 3-Cyclohexylaminopropan-1-sulfonsäure und 4-Cyclohexylaminobutan-1-sulfonsäure.

Beim erfindungsgemäßen Verfahren werden die mindestens eine Mercapto- oder Aminogruppe tragenden Sulfonsäuren B) vor, während oder im Anschluß an die Umsetzung mit der Polyisocyanatkomponente A) zumindest anteilig neutralisiert und auf diese Weise in Sulfonatgruppen überführt.

Als Neutralisationsmittel hierfür geeignet sind beliebige Basen, wie Alkalihydroxide oder Erdalkalihydroxide, vorzugsweise jedoch Amine, insbesondere tertiäre Monoamine, wie z. B. Trimethylamin, Triethylamin, die isomeren Tripropyl- und Tributylamine, N,N-Dimethylethylamin, N,N-Dimethylpropylamin, N,N-Dimethylisopropylamin, N,N-Dimethylbutylamin, N,N-Dimethylisobutylamin, N,N-Dimethyloctylamin, N,N-Dimethyl-2-ethylhexylamin, N,N-Dimethyllaurylamin, N,N-Diethylmethylamin, N,N-Diethylpropylamin, N,N-Diethylbutylamin, N,N-Diethylhexylamin, N,N-Diethyloctylamin, N,N-Diethyl-2-ethylhexylamin, N,N-Diethyllaurylamin, N,N-Diisopropylmethylamin, N,N-Diisopropylethylamin, N,N-Diisopropylbutylamin, N,N-Diisopropyl-2-ethylhexylamin, N,N-Dioctylmethylamin, N,N-Dimethylallylamin, N,N-Dimethylbenzylamin, N,N-Diethylbenzylamin, N,N-Dibenzylmethylamin, Tribenzylamin, N,N-Dimethyl-4-methylbenzylamin, N,N-Dimethylcyclohexylamin, N,N-Diethylcyclohexylamin, N,N-Dicyclohexylmethylamin, N,N-Dicyclohexylethylamin, Tricyclohexylamin, N-Methylpyrrolidin, N-Ethylpyrrolidin, N-Propylpyrrolidin, N-Butylpyrrolidin, N-Methylpiperidin, N-Ethylpiperidin, N-Propylpiperidin, N-Butylpiperidin, N-Methylmorpholin, N-Ethylmorpholin, N-Propylmorpholin, N-Butylmorpholin, N-sec-Butylmorpholin, N-tert-Butylmorpholin, N-Isobutylmorpholin und Quinuclidin oder tertiäre Diamine, wie z. B. 1,3-Bis-(dimethylamino)-propan, 1,4-Bis-(dimethylamino)-butan und N,N'-Dimethylpiperazin, oder beliebige Gemische solcher tertiären Amine.

Geeignete, jedoch weniger bevorzugte Neutralisationsamine sind daneben auch gegenüber Isocyanaten reaktive Gruppen tragende tertiäre Amine, beispielsweise Alkanolamine, wie z. B. Dimethylethanolamin, Methyldiethanolamin oder Triethanolamin.

Bevorzugte Neutralisationsamine für die Mercapto- oder Aminosulfonsäuren B) sind N,N-Dimethylbutylamin, N,N-Dimethyl-2-ethylhexylamin, N,N-Diethylmethylamin, N,N-Diisopropylethylamin, N,N-Diisopropyl-2-ethylhexylamin N,N-Dimethylcyclohexylamin, N,N-Dicyclohexylmethylamin, N-Methylpyrrolidin, N-Methylpiperidin, N-Ethylpiperidin, N-Methylmorpholin, N-Ethylmorpholin, N-Isobutylmorpholine oder deren Gemische.

Besonders bevorzugt sind N,N-Dimethylbutylamin, N,N-Diethylmethylamin, N,N-Diisopropylethylamin, N,N-Dimethylcyclohexylamin, N-Methylpiperidin, N-Ethylmorpholin oder deren Gemische.

Die genannten Neutralisationmittel werden beim erfindungsgemäßen Verfahren in solchen Mengen zugesetzt, dass die Sulfonsäuregruppen der Ausgangsverbindungen B) in den resultierenden Verfahrensprodukten zu mindestens 20 mol-%, vorzugsweise zu mindestens 50 mol-%, besonders bevorzugt zu mindestens 90 mol-% und ganz besonders bevorzugt vollständig neutralisiert sind und in Form von Sulfonatgruppen vorliegen.

Ausgangsverbindungen C) für das erfindungsgemäße Verfahren sind beliebige nichtionisch hydrophile oder hydrophobe organische Verbindungen, die mindestens eine gegenüber Isocyanaten reaktive Gruppe aufweisen. Die Verbindungen C) sind unterschiedlich zu B).

Geeignete nichtionisch hydrophile organische Verbindungen C) sind beispielsweise ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Bevorzugte Polyalkylenoxidpolyetheralkohole C) sind solche, die unter Verwendung der oben genannten Monoalkohole des Molekulargewichtsbereiches 32 bis 150 als Startermoleküle hergestellt wurden. Besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Nichtionisch hydrophile organische Verbindungen C) kommen beim erfindungsgemäßen Verfahren, falls überhaupt, in Mengen von bis zu 30 Gew.-%, vorzugsweise bis zu 25 Gew.-%, besonders bevorzugt bis zu 20 Gew.-%, bezogen auf das Ausgangspolyisocyanat A) zum Einsatz.

Geeignete hydrophobe organische Verbindungen C) sind beispielsweise aliphatische Alkohole oder Fettsäureesteralkohole mit jeweils mindestens 8 Kohlenstoffatomen.

Geeignete aliphatische hydrophobe Alkohole sind beispielweise 1-Octanol, 2-Ethyl-1-hexanol, die isomeren Nonanole, Decanole, Undecanole, Dodecanole, Tridecanole, Tetradecanole, Pentadecanole, Hexadecanole und 3-Phenyl-2-propenol (Zimtalkohol) sowie auf diesen Alkoholen gestartete hydrophobe Polyalkylenoxidalkohole, deren Alkylenoxideinheiten zu mindestens 80 mol-%, vorzugsweise mindestens 90 mol-%, besonders bevorzugt ausschließlich aus Propylenoxideinheiten bestehen.

Geeignete Fettsäureesteralkohole C) sind beispielsweise Veresterungsprodukte hydroxyfunktioneller Fettsäuren, wie z. B. Hydroxyessigsäure, 3-Hydroxypropionsäure, 3- und 4-Hydroxybuttersäure, 2-Hydroxybernsteinsäure (Äpfelsäure), 2,3-Dihydroxybernsteinsäure (Weinsäure), 2-Hydroxy-1,2,3-propan-tricarbonsäure (Citronensäure), Hydroxystearinsäure, Ricinolsäure, Salicylsäure und Mandelsäure, mit Alkoholen, wie z. B. Methanol, Ethanol, n-Propanol, Isopropanol, n-Butanol, Isobutanol, sec-Butanol, den isomeren Pentanolen, Hexanolen, Octanolen und Nonanolen, n-Decanol oder n-Dodecanol, bei denen die Summe der Kohlenstoffatome von Fettsäure und Veresterungsalkohol mindestens 8 beträgt.

Hydrophobe organische Verbindungen C) kommen, falls überhaupt, beim erfindungsgemäßen Verfahren in Mengen von bis zu 30 Gew.-%, vorzugsweise bis zu 20 Gew.-%, besonders bevorzugt bis zu 10 Gew.-%, bezogen auf das Ausgangspolyisocyanat A) zum Einsatz.

Erfindungsgemäß erfolgt beim erfindungsgemäßen Verfahren die Umsetzung der Polyisocyanatkomponente A) mit der organischen Sulfonsäure- oder Sulfonatgruppen enthaltenden Verbindung B) in Gegenwart mindestens eines Antioxidans D).

Geeignete Antioxidantien D) sind beliebige an sich bekannte organische Verbindungen, die in der Lack- und Beschichtungstechnologie zur Verhinderung unerwünschter, beispielsweise durch Sauerstoff-Einwirkung induzierter oxidativer Alterungsprozesse eingesetzt werden und die in der Regel als Radikalfänger für die bei der Autooxidation auftretenden freien Radikale oder Peroxidzersetzer wirken. Geeignete, in der Lackindustrie übliche Antioxidantien sind beispielsweise Phenole, Thioether und/oder di- oder trisubstituierte Phosphite.

Geeignete Phenole D) sind insbesondere sterisch gehinderte Phenole, wie z. B. 2,6-Di-tert-butylphenol, 2,4-Dimethyl-6-tert-butylphenol, 2,6-Di-tert-butyl-4-methylphenol, Triethylenglykolbis(3-tert-butyl-4-hydroxy-5-methylphenyl)propionat, Octadecyl-3-(3,5-di-tert-butyl-4-hydroxyphenyl)-propionat, Pentaerythrit-tetrakis(3-(3,5-di-tert-butyl-4-hydroxy-phenyl)propionat), Ester der 3-(3,5-Di-tert-butyl-4-hydroxyphenyl)propionsäure mit aliphatischen verzweigten C7- bis C9-Alkoholen, wie z. B. Isoheptyl-3-(3,5-di-tert-butyl-4-hydroxyphenyl)propionat, Isooctyl-3-(3,5-di-tert-butyl-4-hydroxyphenyl)propionat oder Isononyl-3-(3,5-di-tert-butyl-4-hydroxy-phenylpropionat, Isotridecyl-3-(3,5-di-tert-butyl-4-hydroxyphenyl)propionat, Thiodiethyl-bis[3-(3,5-di-tert-butyl-4-hydroxyphenyl)propionat], N,N'-Hexamethylen-bis(3,5-di-tert-butyl-4-hydroxyphenyl)propionsäureamid, 1,2-Bis(3,5-di-tert-butyl-4-hydroxyphenylpropionsäure) hydrazid, 2,4-Di-tert-butylphenyl-4'-hydroxy-3',5'-di-tert-butylbenzoat, Ester der (3,5-di-tert-butyl-4-hydroxyphenyl)methylthioessigsäure mit aliphatischen verzweigten C10- bis C14-Alkoholen, 2,2'-Thio-bis(4-methyl-6-tert-butylphenol), 2-Methyl-4,6-bis(octylthiomethyl)phenol, 1,3,5-Trimethyl-2,4,6-Tris(3,5-di-tert-butyl-4-hydroxybenzyl)benzol, Tris(3,5-di-tert-butyl-4-hydroxybenzyl)isocyanurat oder 2,5-Di-tert-amylhydrochinon.

Geeignete Thioether D) sind beispielsweise Didodecyl-3,3'-thiodipropionat oder Dioctadecyl-3,3'-thiodipropionat, die vorzugsweise in Kombination mit phenolischen Antioxidatien der genannten Art eingesetzt werden.

Geeignete Phosphite D) sind beispielsweise di- oder vorzugsqweise trisubstituierte Phosphite, wie z. B. Dibutylphosphit und Dibenzylphosphit, Triethylphosphit und Tributylphosphit. Vorzugsweise handelt es sich bei den Antioxidantien D) vom Phosphit-Typ aber um trisubstituierte Phosphite, bei denen mindestens einer der Substituenten einen gegebenenfalls substituierten aromatischen Rest mit 6 bis 18 Kohlenstoffatomen oder einen linearen oder verzweigten aliphatischen Rest mit 9 bis 18 Kohlenstoffatomen darstellt, beispielsweise um Arylphosphite, wie z. B. Triphenylphosphit, Tris(2,4-di-tert-butylphenyl)phosphit oder Tris(nonylphenyl)phosphit, Alkyl-arylphosphite, wie z. B. Diphenyl-isooctylphosphit, Diphenyl-isodecylphosphit, Diisodecyl-phenylphosphit, Diisooctyloctylphenylphosphit, Phenyl-neopentylglykolphosphit oder 2,4,6-Tri-tert.-butylphenyl-(2-butyl-2-ethyl-1,3-propandiol)phosphit, Alkylphosphite, wie z. B. Triisodecylphosphit, Trilaurylphosphit oder Tris(tridecyl)phosphit, oder aromatisch bzw. aliphatisch substituierte Diphosphite, wie z. B. Diisodecyl-pentaerythritdiphosphit, Distearyl-pentaerythritdiphosphit, Bis(2,4-di-tert.-butylphenyl)-pentaerythritdiphosphit oder Tetraphenyl-dipropylenglykoldiphosphit.

Bevorzugte Antioxidantien D) für das erfindungsgemäße Verfahren sind phenolische Verbindungen der gennanten Art, besonders bevorzugt sterisch gehinderte Phenole, die 2,6-Di-tert-butyl-4-methylphenol-Strukturen enthalten. Ganz besonders bevorzugte Antioxidantien D) sind 2,6-Di-tert-butyl-4-methylphenol, Ester der 3-(3,5-Di-tert-butyl-4-hydroxyphenyl)propionsäure mit aliphatischen verzweigten C7- bis C9-Alkoholen, Octadecyl-3-(3,5-di-tert-butyl-4-hydroxyphenyl)-propionat und/oder Thiodiethyl-bis(3-(3,5-di-tert-butyl-4-hydroxyphenyl)propionat).

Die Antioxidantien D) können beim erfindungsgemäßen Verfahren sowohl einzeln als auch in beliebigen Kombinationen untereinander in Mengen von 0,001 bis 3,0 Gew.-%, bevorzugt 0,002 bis 2,0 Gew.-%, besonders bevorzugt von 0,005 bis 1,0 Gew.-%, ganz besonders bevorzugt von 0,01 bis 0,5 Gew.-%, berechnet als Gesamtmenge an eingesetzten Antioxidantien, bezogen auf die Menge an Ausgangspolyisocyanat A), eingesetzt werden.

Zur Durchführung des erfindungsgemäßen Verfahrens werden die Ausgangskomponenten A), B) und gegebenenfalls C) in Gegenwart eines Antioxidans D) bei Temperaturen von 40 bis 150 °C, vorzugsweise 50 bis 130 °C, besonders bevorzugt 70 bis 110 °C, unter Einhaltung eines Äquivalent-Verhältnisses von NCO-Gruppen zu gegenüber NCO-Gruppen reaktiven Gruppen von 2:1 bis 400:1, vorzugsweise von 4:1 bis 250:1, vorzugsweise bis zum Erreichen des theoretisch errechneten NCO-Gehalts miteinander umgesetzt, wobei der Verlauf der Umsetzung durch z. B. titrimetrische Bestimmung des NCO-Gehaltes verfolgt werden kann. Die Bestimmung des NCO-Gehaltes erfolgt vorzugsweise titrimetrisch nach DIN EN ISO 11909:2007-05.

Das erfindungswesentliche Antioxidans D) kann dabei in der oben angegebenen Menge einem oder mehreren der Reaktionspartner, der Polyisocyanatkomponente A), der Mercapto- oder Aminogruppen tragenden Verbindung mit Sulfonsäure- und/oder Sulfonatgruppen B) und/oder den gegebenenfalls mitzuverwendenden nichtionisch hydrophilen oder hydrophoben organischen Verbindungen C) bereits vor Beginn der eigentlichen Umsetzung zugemischt werden. Das Antioxidans D) kann aber auch zu jedem beliebigen Zeitpunkt während des Zudosierens der Reaktionspartner oder auch im Anschluss daran, vorzugsweise zu Beginn des Zudosierens, dem Reaktionsgemisch zugegeben werden.

Bei Einsatz von Mercapto- oder Aminosulfonsäuren B) werden diese beim erfindungsgemäßen Verfahren wie oben beschrieben vor, während oder im Anschluß an die Umsetzung mit der Polyisocyanatkomponente A) zumindest anteilig durch Zugabe eines Neutralisationsmittels der obengenannten Art in der obengenannten Menge neutralisiert und in Sulfonatgruppen überführt. In dem Fall, dass die Neutralisation vor bzw. während der Umsetzung stattfindet, ist es auch möglich, das Antioxidans D) dem Neutralisationsmittel, vorzugsweise einem tertiären Amin der obengenannten Art zuzumischen.

Bevorzugt wird das Antioxidans D) vor Beginn der Umsetzung der Polyisocyanatkomponente A) zugesetzt.

Die Reaktion der Komponente A) mit B) und gegebenenfalls C) verläuft in der Regel ausreichend schnell, jedoch können zur Beschleunigung der Umsetzung beim erfindungsgemäßen Verfahren gegebenenfalls übliche aus der Polyurethanchemie bekannten Katalysatoren mitverwendet werden, beispielsweise weitere tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethyl-aminocyclohexan, N,N'-Dimethylpiperazin oder Metallsalze wie Eisen(III)-chlorid, Aluminiumtri(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutyl-zinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Molybdänglykolat oder beliebige Gemische solcher Katalysatoren.

Diese Katalysatoren kommen beim erfindungsgemäßen Verfahren, falls überhaupt, in einer Menge von 0,001 bis 2 Gew.-%, vorzugsweise 0,005 bis 0,5 Gew.-%, bezogen auf das Gesamtgewicht der Reaktionspartner, zum Einsatz.

Das erfindungsgemäße Verfahren wird vorzugsweise lösemittelfrei durchgeführt. Gegebenenfalls können aber auch geeignete, gegenüber den reaktiven Gruppen der Ausgangskomponenten, insbesondere gegenüber Isocyanatgruppen inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Butylglykolacetat, Butyldiglykolacetat, 1,3-Dioxolan, N-Methylpyrrolidon und N-Methylcaprolactam, oder beliebige Gemische solcher Lösemittel.

Als Verfahrensprodukte erhält man Sulfonatgruppen enthaltende Polyisocyanate, die sich im direkten Vergleich zu analog aufgebauten Sulfonatgruppen enthaltenden Polyisocyanaten, wie sie nach den bisher bekannten Herstellverfahren des Standes der Technik ohne Mitverwendung von Antioxidantien erhältlich waren, durch höhere Isocyanatgehalte, niedrigere Farbzahlen und insbesondere niedrigere Viskositäten und eine bessere Emulgierbarkeit auszeichnen. Sie lassen sich in der Regel leicht, ohne Einsatz hoher Scherkräfte durch bloßes Einrühren in Wasser in sedimentationsstabile Dispersionen überführen.

Die für das erfindungsgemäße Verfahren als bevorzugt gekennzeichneten Merkmale sind auch für die weiteren Erfindungsgegenstände bevorzugt.

Mit dem erfindungsgemäßen Verfahren können daher Sulfonatgruppen enthaltende Polyisocyanate, erhalten werden. Neben vorstehend genannten Unterschieden kann es je nach eingesetztem Radikalfänger und/oder Peroxidzersetzer D) auch zur chemischen Reaktion mit den Isocyanatgruppen kommen. Daher ist beispielsweise beim Einsatz der oben genannten phenolischen Verbindungen als Radikalfänger und/oder Peroxidzersetzer D) ein Sulfonatgruppen enthaltendes Polyisocyanat, dadurch gekennzeichnet, dass es eine oder mehrere Urethangruppen, bevorzugt von 0,005 bis 0,9 Gew.-% an Urethangruppen (berechnet als -NHCOO-; Mol.-Gewicht= 59 g/mol) aufweist, die an einen phenolischen Rest gebunden sind, erhältlich.

Gegebenenfalls können den erhaltenen Sulfonatgruppen enthaltenden Polyisocyanaten vor der Emulgierung beliebige weitere nichthydrophilierte Polyisocyanate, beispielsweise solche der als geeignete Ausgangspolyisocyanate A) genannten Art, zugesetzt werden, wodurch Polyisocyanatgemische erhalten werden, die ebenfalls erhaltene Polyisocyanatgemische darstellen, da diese im Allgemeinen aus Gemischen aus
(i) mit Sulfonatgruppen hydrophil modifizierten Polyisocyanaten und
(ii) unmodifizierten Polyisocyanaten der beispielhaft genannten Art bestehen.

In solchen Mischungen übernehmen die erhaltenen Sulfonatgruppen enthaltenden Polyisocyanate die Funktion eines Emulgators für den nachträglich zugemischten Anteil an nichthydrophilen Polyisocyanaten.

Die erhaltenen Polyisocyanatgemische stellen wertvolle Ausgangsmaterialien zur Herstellung von Polyurethankunststoffen nach dem Isocyanat-Polyadditionsverfahren dar. Hierzu werden die Polyisocyanatgemische vorzugsweise in Form wäßriger Emulsionen eingesetzt, die in Kombination mit in Wasser dispergierten Polyhydroxylverbindungen im Sinne von wäßrigen Zweikomponenten-Systemen zur Umsetzung gebracht werden können.

Ein weiterer Gegenstand der vorliegenden Erfindung ist die Verwendung eines oder mehrerer Antioxidantien D), bevorzugt eines oder mehrerer sterisch gehinderter Phenole, die 2,6-Di-tert-butyl-4-methylphenol-Strukturen enthalten, zur Verbesserung der Einarbeitbarkeit Sulfonatgruppen enthaltender Polyisocyanate in wässrige Systeme.

Besonders bevorzugt werden die erhaltenen Sulfonatgruppen enthaltenden Polyisocyanatgemische als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wäßrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen.

In diesem Zusammenhang seien als Lackbindemittel oder Lackbindemittelkomponenten beispielhaft erwähnt: in Wasser gelöste oder dispergierte, Hydroxylgruppen aufweisende Polyacrylate, insbesondere solche des Molekulargewichtsbereichs 1.000 bis 20.000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erhaltenen Polyisocyanatgemische alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Erhalten werden kann ein Beschichtungsmittel enthaltend mindestens ein Sulfonatgruppen enthaltendes Polyisocyanat.

Bei der Verwendung als Vernetzerkomponente für wäßrige Lackbindemittel werden die erhaltenen Sulfonatgruppen enthaltenden Polyisocyanatgemische im Allgemeinen in solchen Mengen eingesetzt, die einem Aquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen.

Gegebenenfalls können die erhaltenen Polyisocyanatgemische in untergeordneten Mengen auch nichtfunktionellen wäßrigen Lackbindemitteln zur Erzielung ganz spezieller Eigenschaften, beispielsweise als Additiv zur Haftverbesserung zugemischt werden.

Selbstverständlich können die erhaltenen Polyisocyanatgemische auch in mit aus der Polyurethanchemie an sich bekannten Blockierungsmitteln blockierter Form in Kombination mit den obengenannten wäßrigen Lackbindemitteln oder Lackbindemittelkomponenten im Sinne von wäßrigen Einkomponenten-PUR-Einbrennsystemen eingesetzt werden. Geeignete Blockierungsmittel sind beispielsweise Malonsäurediethylester, Acetessigester, Acetonoxim, Butanonoxim, ε-Caprolactam, 3,5-Dimethylpyrazol, 1,2,4-Triazol, Dimethyl-1,2,4-triazol, Imidazol oder beliebige Gemische dieser Blockierungsmittel.

Als Untergründe für die mit Hilfe der erhaltenen Sulfonatgruppen enthaltenden Polyisocyanatgemische formulierten wäßrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im Allgemeinen besitzen die mit den erhaltenen Polyisocyanatgemischen formulierten wäßrigen Beschichtungsmittel, denen gegebenenfalls die auf dem Lacksektor üblichen Hilfs- und Zusatzmittel, wie z. B. Verlaufshilfsmittel, Farbstoffe, Farbpigmente, Füllstoffe, Mattierungsmittel oder Emulgatoren, einverleibt werden können, schon bei Raumtemperaturtrocknung gute lacktechnische Eigenschaften. Selbstverständlich lassen sie sich jedoch auch unter forcierten Bedingungen bei erhöhter Temperatur bzw. durch Einbrennen bei Temperaturen bis 260 °C trocknen.

Erhalten werden kann ein Substrat, beschichtet mit einem gegebenenfalls unter Wärmeeinwirkung ausgehärteten Beschichtungsmittel.

Aufgrund ihrer hervorragenden Wasseremulgierbarkeit, die eine homogene, besonders feinteilige Verteilung in wäßrigen Lackbindemitteln ermöglicht, führt die Verwendung der erhaltenen Polyisocyanatgemische als Vernetzerkomponente für wäßrige Polyurethanlacke zu Beschichtungen mit hervorragenden optischen Eigenschaften, insbesondere hohem Oberflächenglanz, Verlauf und hoher Transparenz.

Neben der bevorzugten Verwendung als Vernetzerkomponenten für wäßrige 2K-PUR-Lacke eignen sich die erhaltenen Sulfonatgruppen enthaltenden Polyisocyanatgemische hervorragend als Vernetzer für wäßrige Dispersionsklebstoffe, Leder- und Textilbeschichtungen oder Textildruckpasten, als AOX-freie Papierhilfsmittel oder auch als Zusatzmittel für mineralische Baustoffe, beispielsweise Beton- oder Mörtelmassen.

Die für das erfindungsgemäße Verfahren als bevorzugt gekennzeichneten Merkmale sind auch für die weiteren Erfindungsgegenstände bevorzugt.

Die nachfolgenden Beispiele dienen zur Verdeutlichung der vorliegenden Erfindung, sollen aber keinesfalls als Einschränkung des Schutzbereichs verstanden werden.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s-1.

Die Rest-Monomeren Gehalte wurden nach DIN EN ISO 10283:2007-11 gaschromatographisch mit internem Standard gemessen.

Wassergehalte wurden durch volumetrische Titration nach Karl Fischer nach DIN 53715 (erstellt in Anlehnung an DIN 51777 Teil 1 (Ausgabe 1973)) unter Verwendung eines Titrierautomaten Titrando 841 der Fa. Methrom bestimmt. Der Messbereich dieser Methode liegt bei 0,01 bis 99 Gew.%.

Als Maß für die Emulgierbarkeit der hydrophilen Polyisocyanate dienen die mittleren Teilchengrößen (MTG) 25 %iger wässriger Emulsionen. Dazu wurden jeweils 25 g der erhaltenen Polyisocyanatgemisches in einem Erlenmeyerkolben mit 75 g entionisiertem Wasser, entsprechend einem Festkörpergehalt von jeweils 25 Gew.-%, versetzt und anschließend jeweils 1 min mit Hilfe eines Magnetrührers bei 900 U/min gerührt. Anschließend wurden die mittlere Teilchengrößen [nm] der auf diese Weise erhaltenen wässrigen Emulsionen mit einem Zetasizer, Typ DTS 5100, der Fa. Malvern Instruments GmbH (DE) bestimmt. Je kleiner die mittlere Teilchengröße, desto je feiner die Verteilung eines Vernetzers in der wäßrigen Phase (Lackbindemittel) und desto klarer und brillanter die erhältlichen Lackfilme.

Die Messung der Hazen-Farbzahl erfolgte spektrofotometrisch nach DIN EN ISO 6271-2:2005-03 mit einem LICO 400-Spektrofotometer der Fa. Lange, DE.

### Ausgangsverbindungen

### Polyisocyanate A)

### Ausgangspolyisocyanat A1)

Isocyanuratgruppen enthaltendes HDI-Polyisocyanat, hergestellt durch katalytische Trimerisierung von HDI in Anlehnung an Beispiel 11 der EP-A 330 966, mit der Änderung, dass die Reaktion bei einem NCO-Gehalt der Rohmischung von 40 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt.

| | |
|---|---|
| NCO-Gehalt: | 21,7 % |
| NCO-Funktionalität: | 3,4 |
| Monomeres HDI: | 0,1 % |
| Viskosität (23°C): | 3080 mPas |
| Farbzahl (Hazen): | 18 |

### Ausgangspolyisocyanat A2)

Isocyanurat- und Iminoxadiazindiongruppen enthaltendes HDI-Polyisocyanat, hergestellt in Anlehnung an Beispiel 4 der EP-A 0 962 455, durch Trimeriserung von HDI unter Verwendung einer 50 %-igen Lösung von Tetrabutylphosphoniumhydrogendifluorid in Isopropanol/Methanol (2:1) als Katalysator. Die Reaktion wurde bei einem NCO-Gehalt der Rohmischung von 43 % durch Zugabe von Dibutylphosphat gestoppt. Anschließend wurde nicht umgesetztes HDI durch Dünnschichtdestillation bei einer Temperatur von 130°C und einem Druck von 0,2 mbar abgetrennt.

| | |
|---|---|
| NCO-Gehalt: | 23,4 % |
| NCO-Funktionalität: | 3,2 |
| Monomeres HDI: | 0,2 % |
| Viskosität (23°C): | 700 mPas |
| Farbzahl (Hazen): | 14 |

### Ausgangspolyisocyanat A3)

Isocyanuratgruppen enthaltendes IPDI-Polyisocyanat, hergestellt durch katalytische Trimerisierung von IPDI nach Beispiel 2 der EP-A-0 003 765. Die Reaktion wurde bei einem NCO-Gehalt der Rohmischung von 30,1 % durch Zugabe einer äquimolaren Menge an Dibutylphosphat, bezogen auf eingesetzte Katalysatormenge, und 30 minütiges Nachrühren bei 80°C deaktiviert. Anschließend wurde nicht umgesetztes IPDI durch Dünnschichtdestillation bei einer Temperatur von 170°C und einem Druck von 0,3 mbar abgetrennt und das erhaltene Festharz mit Butylacetat bis zu einem Festkörpergehalt von 70 % verdünnt.

| | |
|---|---|
| NCO-Gehalt: | 11,9% |
| NCO-Funktionalität: | 3,3 |
| Monomeres IPDI: | 0,28 % |
| Viskosität (23°C): | 620 mPas |
| Farbzahl (Hazen): | 14 |

### Ausgangspolyisocyanat A4)

Isocyanuratgruppen enthaltendes PDI-Polyisocyanat, hergestellt durch katalytische Trimerisierung von PDI nach dem in der WO 2016/146579 für die Polyisocyanatkomponente A2) beschriebenen Verfahren. Die Reaktion wurde bei einem NCO-Gehalt der Rohmischung von 36,7 % durch Zugabe einer äquimolaren Menge an Dibutylphosphat, bezogen auf eingesetzte Katalysatormenge, und 30 minütiges Nachrühren bei 80°C deaktiviert. Anschließend wurde nicht umgesetztes PDI durch Dünnschichtdestillation bei einer Temperatur von 140°C und einem Druck von 0,5 mbar abgetrennt.

| | |
|---|---|
| NCO-Gehalt: | 21,8 % |
| NCO-Funktionalität: | 3,5 |
| monomeres PDI: | 0,09 % |
| Viskosität (23 °C): | 9850 mPas |
| Farbzahl (Hazen): | 34 |

### Aminosulfonsäuren B)

CAPS: 3-(Cyclohexylamino)-propansulfonsäure (Sigma-Aldrich Chemie Gmbh, München, DE), Wassergehalt der Lieferform: 1,7 %
CABS: 4-(Cyclohexylamino)-butansulfonsäure (Santa Cruz Biotechnology, Inc., Heidelberg, DE), Wassergehalt der Lieferform: 4,5 %

Vor Verwendung wurden die beiden Aminosulfonsäuren jeweils 4 Stunden bei 100°C im Vakuum (ca. 0,5 mbar) getrocknet. In den Bespielen kam CAPS mit einem Wassergehalt von 0,15 %, CABS mit einem Wassergehalt von 0,30 % zum Einsatz.

### Antioxidantien D)

### Antioxidans D1)

2,6-Di-tert-butyl-4-methylphenol (Merck Schuchardt OHG, Hohenbrunn, DE)

### Antioxidans D2)

3-(3,5-Di-tert-butyl-4-hydroxyphenyl)propionsäureester mit aliphatischen verzweigten C₇- bis C₉-Monoalkoholen (Irganox^{®} 1135, BASF SE, Ludwigshafen, DE)

### Antioxidans D3)

3-(3,5-Di-tert-butyl-4-hydroxyphenyl)propionsäureoctadecylester (Irganox^{®} 1076, BASF SE, Ludwigshafen, DE)

### Antioxidans D4)

Thiodiethyl-bis(3-(3,5-di-tert-butyl-4-hydroxyphenyl)propionat) (Irganox^{®} 1035, BASF SE, Ludwigshafen, DE)

### Beispiel 1 (nicht erfindungsgemäß)

957,3 g (4,95 val) des Isocyanuratgruppen-haltigen Ausgangspolyisocyanates A1) wurden zusammen mit 27,1 g (0,12 val) 3-(Cyclohexylamino)-propansulfonsäure (CAPS) und 15,6 g (0,12 mol) Dimethylcyclohexylamin unter trockenem Stickstoff 6 Stunden bei 100 °C gerührt. Nach Abkühlen auf Raumtemperatur lag ein weitestgehend klares Sulfonatgruppen enthaltendes Polyisocyanatgemisch vor. Nach Filtration über eine Filterschicht T 5500 (Fa. Seitz) wurden folgende Kenndaten ermittelt:

| | |
|---|---|
| NCO-Gehalt: | 20,0 % |
| NCO-Funktionalität: | 3,3 |
| Viskosität (23 °C): | 7410 mPas |
| Farbzahl (Hazen): | 65 |
| Emulgierbarkeit (MTG): | 468 nm |

### Beispiel 2 (erfindungsgemäß)

957,3 g (4,95 val) des Isocyanuratgruppen-haltigen Ausgangspolyisocyanates A1) wurden mit 0,2 g (200 ppm) Antioxidans D1) versetzt und anschließend zusammen mit 27,1 g (0,12 val) 3-(Cyclo-hexylamino)-propansulfonsäure (CAPS) und 15,6 g (0,12 mol) Dimethylcyclohexylamin unter trockenem Stickstoff 6 Stunden bei 100 °C gerührt. Nach Abkühlen auf Raumtemperatur lag ein weitestgehend klares Sulfonatgruppen enthaltendes Polyisocyanatgemisch vor. Nach Filtration über eine Filterschicht T 5500 (Fa. Seitz) wurden folgende Kenndaten ermittelt:

| | |
|---|---|
| NCO-Gehalt: | 20,2 % |
| NCO-Funktionalität: | 3,3 |
| Viskosität (23 °C): | 6840 mPas |
| Farbzahl (Hazen): | 14 |
| Emulgierbarkeit (MTG): | 223 nm |

Der Vergleich der Beispiele 1 (nicht erfindungsgemäß) und 2 (erfindungsgemäß) zeigt, dass das erfindungsgemäß in Gegenwart eines Antioxidans hergestellte hydrophile Polyisocyanat bei ansonsten gleicher Produktzusammensetzung einen höheren NCO-Gehalt, eine niedrigere Viskosität und Farbzahl sowie eine bessere Emulgierbarkeit aufweist.

### Beispiel 3 bis 16 (erfindungsgemäß und Vergleich)

Nach dem in Beispiel 2 beschriebenen Verfahren wurden unterschiedliche Polyisocyanate A) in Gegenwart und Abwesenheit (jeweils Vergleich) unterschiedlicher Antioxidantien D) mit Aminosulfonsäuren B) umgesetzt. Die nachfolgende Tabelle 1 zeigt die Zusammensetzung der Reaktionsansätze in Gew.-Teilen, die eingesetzte Menge an Antioxidans in ppm bezogen auf den jeweiligen Gesamtansatz sowie die Kenndaten der erhaltenen Produkte.

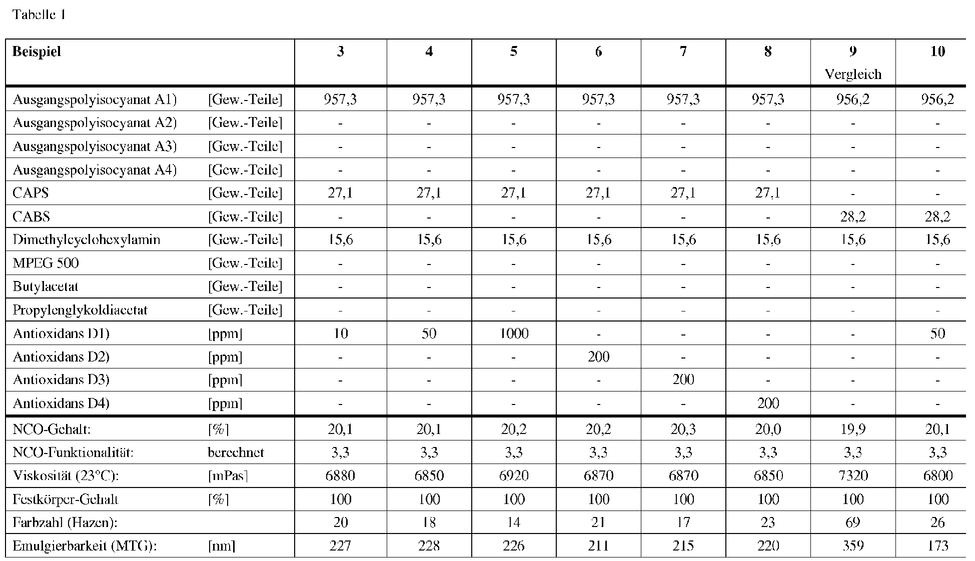

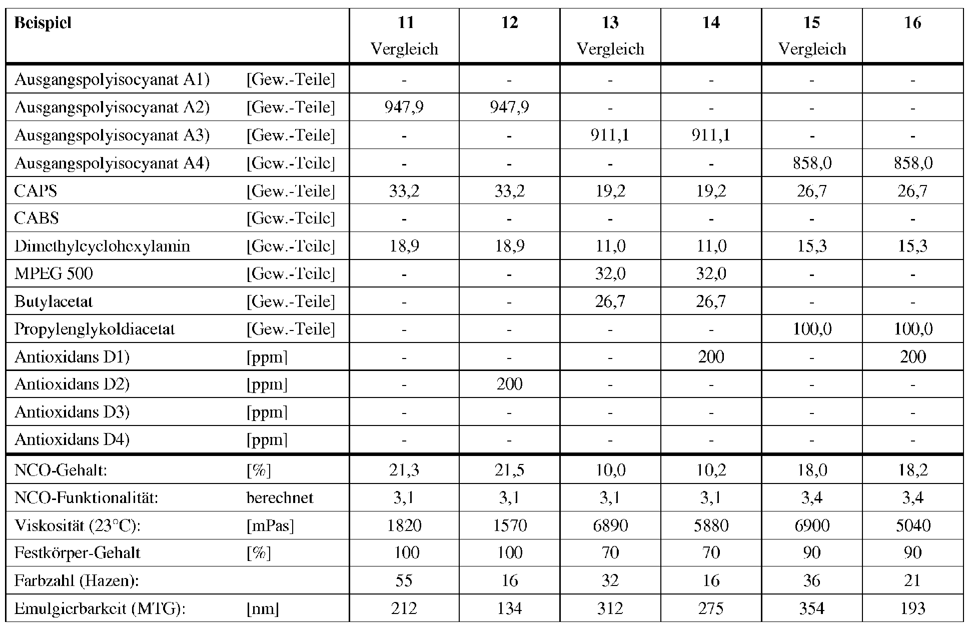

## Patentansprüche

1. Verfahren zur Herstellung Sulfonatgruppen enthaltender Polyisocyanate, umfassend eine Umsetzung von
A) mindestens einer Polyisocyanatkomponente mit aliphatisch, cycloaliphatisch, araliphatisch und/oder aromatisch gebundenen Isocyanatgruppen mit
B) mindestens einer, mindestens eine Mercapto- oder Aminogruppe tragenden organischen Verbindung, die eine oder mehrere Sulfonsäure- und/oder Sulfonatgruppen aufweist, wobei die Sulfonsäuregruppen zumindest anteilig während und/oder im Anschluß an die Umsetzung von A) mit B) neutralisiert werden, und gegebenenfalls
C) weiteren nichtionisch hydrophilen oder hydrophoben organischen Verbindungen, die mindestens eine gegenüber Isocyanaten reaktive Gruppe aufweisen,
**dadurch gekennzeichnet,**
**dass** die Umsetzung der Polyisocyanatkomponente A) mit der organischen Verbindung B) in Gegenwart mindestens eines Antioxidans D) durchgeführt wird.

2. Verfahren gemäß Anspruch 1, **dadurch gekennzeichnet, dass** es sich bei der Polyisocyanatkomponente A) um Polyisocyanate mit Uretdion-, Isocyanurat-, Allophanat-, Biuret-, Iminooxadiazindion- und/oder Oxadiazintrionstruktur mit ausschließlich aliphatisch und/oder cycloaliphatisch gebundenen Isocyanatgruppen handelt.

3. Verfahren gemäß Anspruch 1 oder 2, **dadurch gekennzeichnet, dass** es sich bei der mindestens eine gegenüber Isocyanatgruppen reaktive Gruppe tragenden organischen Verbindung mit Sulfonsäure- oder Sulfonatgruppen B) um aminofunktionelle Sulfonsäuren und/oder deren Salze handelt.

4. Verfahren gemäß einem der Ansprüche 1 bis 3, **dadurch gekennzeichnet, dass** es sich bei der mindestens eine Mercapto- oder Aminogruppe tragenden organischen Verbindung mit Sulfonsäure- oder Sulfonatgruppen B) um aminofunktionelle Sulfonsäuren der allgemeinen Formel (11) und/oder deren Salze handelt, 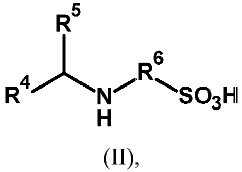 wobei in Formel (II) R⁴ und R⁵ unabhängig voneinander für gleiche oder verschiedene Reste stehen und Wasserstoff oder gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen, wobei R⁴ und R⁵ auch in Kombination untereinander und gegebenenfalls mit einem weiteren Stickstoffatom oder einem Sauerstoffatom cycloaliphatische oder heterocyclische Ringe mit 3 bis 8 Kohlenstoffatomen bilden können, die gegebenenfalls weiter substituiert sein können, und R⁶ für einen linearen oder verzweigten aliphatischen Rest mit 2 bis 6 Kohlenstoffatomen steht.

5. Verfahren gemäß einem der Ansprüche 1 bis 4, **dadurch gekennzeichnet, dass** es sich bei der mindestens eine Mercapto- oder Aminogruppe tragenden organischen Verbindung mit Sulfonsäure- oder Sulfonatgruppen B) um 2-Isopropylaminoethan-1-sulfonsäure, 3-Isopropylaminopropan-1-sulfonsäure, 4-Isopropylaminobutan-1-sulfonsäure, 2-Cyclohexylaminoethan-1-sulfonsäure, 3-Cyclohexylaminopropan-1-sulfonsäure und/oder 4-Cyclohexylaminobutan-1-sulfonsäure und/oder deren Salze handelt.

6. Verfahren gemäß einem der Ansprüche 1 bis 5, **dadurch gekennzeichnet, dass** die mindestens eine Aminogruppe tragenden organischen Verbindungen mit Sulfonsäuregruppen B) zu mindestens 20 mol-% mit N,N-Dimethylbutylamin, N,N-Diethylmethylamin, N,N-Diisopropylethylamin, N,N-Dimethylcyclohexylamin, N-Methylpiperidin und/oder N-Ethylmorpholin neutralisiert in Form von Sulfonatgruppen vorliegen.

7. Verfahren gemäß einem der Ansprüche 1 bis 6, **dadurch gekennzeichnet, dass** es sich bei den nichtionisch hydrophilen oder hydrophoben organischen Verbindungen C) um reine Polyethylenoxidpolyetheralkohole und/oder gemischte Polyalkylenoxidpolyetheralkohole, deren Alkylenoxideinheiten zu mindestens 70 mol-% aus Ethylenoxideinheiten bestehen, und/oder aliphatische Alkohole oder Fettsäureesteralkohole, die jeweils mindestens 8 Kohlenstoffatome aufweisen, handelt.

8. Verfahren gemäß einem der Ansprüche 1 bis 7, **dadurch gekennzeichnet, dass** es sich bei den Antioxidantien D) um Radikalfänger und/oder Peroxidzersetzer, bevorzugt um Phenole, Thioether und/oder di- oder trisubstituierte Phosphite handelt.

9. Verfahren gemäß Anspruch 8, **dadurch gekennzeichnet, dass** es sich bei den Antioxidantien D) um 2,6-Di-tert-butyl-4-methylphenol, Ester der 3-(3,5-Di-tert-butyl-4-hydroxyphenyl)propionsäure mit aliphatischen, verzweigten C₇- bis C₉-Alkoholen, Octadecyl-3-(3,5-di-tert-butyl-4-hydroxyphenyl)-propionat und/oder Thiodiethyl-bis(3-(3,5-di-tert-butyl-4-hydroxyphenyl)propionat) handelt.

10. Verfahren nach einem der Ansprüche 1 bis 9, **dadurch gekennzeichnet, dass** die Antioxidantien D) einzeln als auch in beliebigen Kombinationen untereinander in Mengen von 0,001 bis 3,0 Gew.-%, berechnet als Gesamtmenge an eingesetzten Antioxidantien, bezogen auf die Menge an Ausgangspolyisocyanat A), eingesetzt werden.

11. Verwendung eines oder mehrerer Antioxidantien D), bevorzugt eines oder mehrerer sterisch gehinderter Phenole, die 2,6-Di-tert-butyl-4-methylphenol-Strukturen enthalten, zur Verbesserung der Einarbeitbarkeit Sulfonatgruppen enthaltender Polyisocyanate in wässrige Systeme.

## Claims

1. Process for producing polyisocyanates containing sulfonate groups, comprising a reaction of
A) at least one polyisocyanate component having aliphatically, cycloaliphatically, araliphatically and/or aromatically bonded isocyanate groups with
B) at least one organic compound bearing at least one mercapto or amino group, which comprises one or more sulfonic acid and/or sulfonate groups, wherein the sulfonic acid groups are neutralized at least partially during and/or subsequent to the reaction of A) with B), and optionally
C) further non-ionically hydrophilic or hydrophobic organic compounds having at least one group reactive to isocyanates,
**characterized in that**,
the reaction of the polyisocyanate component A) with the organic compound B) is carried out in the presence of at least one antioxidant D).

2. Process according to Claim 1, **characterized in that** the polyisocyanate component A) comprises polyisocyanates having a uretdione, isocyanurate, allophanate, biuret, iminooxadiazinedione and/or oxadiazinetrione structure having exclusively aliphatically and/or cycloaliphatically bonded isocyanate groups.

3. Process according to Claim 1 or 2, **characterized in that** the organic compound bearing at least one group reactive to isocyanate groups having sulfonic acid or sulfonate groups B) comprises amino-functional sulfonic acids and/or salts thereof.

4. Process according to any of Claims 1 to 3, **characterized in that** the organic compound bearing at least one mercapto or amino group having sulfonic acid or sulfonate groups B) comprises amino-functional sulfonic acids of the general formula (II) and/or salts thereof, 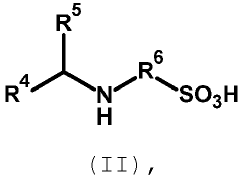 wherein in formula (II) R⁴ and R⁵ are each independently identical or different radicals and are hydrogen or saturated or unsaturated, linear or branched, aliphatic or cycloaliphatic or aromatic organic radicals having 1 to 18 carbon atoms, which are substituted or unsubstituted and/or comprise heteroatoms in the chain, wherein R⁴ and R⁵, in combination with each other and optionally with one further nitrogen atom or one oxygen atom, may form cycloaliphatic or heterocyclic rings having 3 to 8 carbon atoms, which may optionally be further substituted, and R⁶ is a linear or branched aliphatic radical having 2 to 6 carbon atoms.

5. Process according to any of Claims 1 to 4, **characterized in that** the organic compound bearing at least one mercapto or amino group having sulfonic acid or sulfonate groups B) comprises 2-isopropylaminoethane-1-sulfonic acid, 3-isopropylaminopropane-1-sulfonic acid, 4-isopropylaminobutane-1-sulfonic acid, 2-cyclohexylaminoethane-1-sulfonic acid, 3-cyclohexylaminopropane-1-sulfonic acid and/or 4-cyclohexylaminobutane-1-sulfonic acid and/or salts thereof.

6. Process according to any of Claims 1 to 5, **characterized in that** the organic compounds bearing at least one amino group having sulfonic acid groups B) are present to an extent of at least 20 mol% with N,N-dimethylbutylamine, N,N-diethylmethylamine, N,N-diisopropylethylamine, N,N-dimethylcyclohexylamine, N-methylpiperidine and/or N-ethylmorpholine neutralized in the form of sulfonate groups.

7. Process according to any of Claims 1 to 6, **characterized in that** the non-ionically hydrophilic or hydrophobic organic compounds C) are pure polyethylene oxide polyether alcohols and/or mixed polyalkylene oxide polyether alcohols, the alkylene oxide units of which consist of ethylene oxide units to an extent of at least 70 mol%, and/or aliphatic alcohols or fatty acid ester alcohols which comprise in each case at least 8 carbon atoms.

8. Process according to any of Claims 1 to 7, **characterized in that** the antioxidants D) are radical scavengers and/or peroxide decomposers, preferably phenols, thioethers and/or di- or trisubstituted phosphites.

9. Process according to Claim 8, **characterized in that** the antioxidants D) are 2,6-di-tert-butyl-4-methylphenol, esters of 3-(3,5-di-tert-butyl-4-hydroxyphenyl)propionic acid with aliphatic, branched C₇-to C₉-alcohols, octadecyl 3-(3,5-di-tert-butyl-4-hydroxyphenyl)propionate and/or thiodiethyl bis(3-(3,5-di-tert-butyl-4-hydroxyphenyl)propionate).

10. Process according to any of Claims 1 to 9, **characterized in that** the antioxidants D) are used singly and in any combinations with each other in amounts of 0.001 to 3.0% by weight, calculated as the total amount of antioxidants used, based on the amount of starting polyisocyanate A).

11. Use of one or more antioxidants D), preferably one or more sterically hindered phenols comprising 2,6-di-tert-butyl-4-methylphenol structures, for improving the incorporability of polyisocyanates containing sulfonate groups in aqueous systems.

## Revendications

1. Procédé pour la préparation de polyisocyanates contenant des groupes sulfonate, comprenant une transformation de
A) au moins un composant de type polyisocyanate comportant des groupes isocyanate liés de manière aliphatique, cycloaliphatique, araliphatique et/ou aromatique avec
B) au moins un composé organique portant au moins un groupe mercapto ou amino, qui présente un ou plusieurs groupes acide sulfonique et/ou sulfonate, les groupes acide sulfonique étant neutralisés au moins partiellement pendant et/ou à la suite de la transformation de A) avec B), et éventuellement
C) d'autres composés organiques non ioniques hydrophiles ou hydrophobes qui présentent au moins un groupe réactif envers des isocyanates,
**caractérisé en ce que**
la transformation du composant de type polyisocyanate A) avec le composé organique B) est mise en oeuvre en présence d'au moins un antioxydant D).

2. Procédé selon la revendication 1, **caractérisé en ce qu'**il s'agit dans le cas du composant de type polyisocyanate A) de polyisocyanates comportant une structure de type uretdione, isocyanurate, allophanate, biuret, iminooxadiazinedione et/ou oxadiazinetrione dotée de groupes isocyanate liés exclusivement de manière aliphatique et/ou cycloaliphatique.

3. Procédé selon la revendication 1 ou 2, **caractérisé en ce qu'**il s'agit dans le cas du composé organique portant au moins un groupe réactif envers des groupes isocyanate, comportant des groupes acide sulfonique ou sulfonate B), d'acides sulfoniques fonctionnalisés par amino et/ou de leurs sels.

4. Procédé selon l'une quelconque des revendications 1 à 3, **caractérisé en ce qu'**il s'agit dans le cas du composé organique portant au moins un groupe mercapto ou amino, comportant des groupes acide sulfonique ou sulfonate B), d'acides sulfoniques fonctionnalisés par amino de formule générale (II) et/ou de leurs sels, 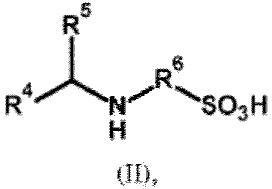 dans lequel dans la formule (II) R⁴ et R⁵ représentent indépendamment l'un de l'autre des radicaux identiques ou différents et sont hydrogène ou des radicaux organiques saturés ou insaturés, linéaires ou ramifiés, aliphatiques ou cycloaliphatiques ou aromatiques comportant 1 à 18 atomes de carbone, qui sont substitués ou non substitués et/ou présentent des hétéroatomes dans la chaîne, R⁴ et R⁵ pouvant former également en combinaison l'un avec l'autre et éventuellement avec un atome d'azote supplémentaire ou un atome d'oxygène des cycles cycloaliphatiques ou hétérocycliques comportant 3 à 8 atomes de carbone, qui peuvent éventuellement être en outre substitués, et R⁶ représente un radical aliphatique linéaire ou ramifié comportant 2 à 6 atomes de carbone.

5. Procédé selon l'une quelconque des revendications 1 à 4, **caractérisé en ce que** le composé organique portant au moins un groupe mercapto ou amino, comportant des groupes acide sulfonique ou sulfonate B) est l'acide 2-isopropylaminoéthane-1-sulfonique, l'acide 3-isopropylaminopropane-1-sulfonique, l'acide 4-isopropylaminobutane-1-sulfonique, l'acide 2-cyclohexylamino-éthane-1-sulfonique, l'acide 3-cyclohexylaminopropane-1-sulfonique et/ou l'acide 4-cyclohexylamino-butane-1-sulfonique et/ou leurs sels.

6. Procédé selon l'une quelconque des revendications 1 à 5, **caractérisé en ce que** les composés organiques portant au moins un groupe amino comportant des groupes acide sulfonique B) sont présents neutralisés sous forme de groupes sulfonate à hauteur d'au moins 20 % en moles avec de la N,N-diméthylbutylamine, de la N,N-diéthylméthylamine, de la N,N-diisopropyléthylamine, de la N,N-diméthylcyclohexylamine, de la N-méthylpipéridine et/ou de la N-éthylmorpholine.

7. Procédé selon l'une quelconque des revendications 1 à 6, **caractérisé en ce que** les composés organiques non ioniques hydrophiles ou hydrophobes C) sont des poly(oxyde d'éthylène)-polyétheralcools purs et/ou des poly(oxyde d'alkylène)-polyétheralcools mélangés, dont les motifs oxyde d'alkylène sont constitués d'au moins 70 % en moles de motifs oxyde d'éthylène, et/ou des alcools aliphatiques ou des alcools d'ester d'acide gras, qui présentent à chaque fois au moins 8 atomes de carbone.

8. Procédé selon l'une quelconque des revendications 1 à 7, **caractérisé en ce que** les antioxydants D) sont des capteurs de radicaux et/ou des agents de décomposition de peroxydes, préférablement des phénols, des thioéthers et/ou des phosphites disubstitués ou trisubstitués.

9. Procédé selon la revendication 8, **caractérisé en ce que** les antioxydants D) sont le 2,6-di-tert-butyl-4-méthylphénol, des esters de l'acide 3-(3,5-di-tert-butyl-4-hydroxyphényl)propionique avec des alcools aliphatiques, ramifiés en C₇₋₉, l'octadécyl-3-(3,5-di-tert-butyl-4-hydroxyphényl)-propionate et/ou le thiodiéthyl-bis(3-(3,5-di-tert-butyl-4-hydroxyphényl)propionate).

10. Procédé selon l'une quelconque des revendications 1 à 9, **caractérisé en ce que** les antioxydants D) sont utilisés individuellement ainsi que dans de quelconques combinaisons l'un avec l'autre en des quantités de 0,001 à 3,0 % en poids, calculées en tant que quantité totale d'antioxydants utilisés, par rapport à la quantité de polyisocyanate de départ A).

11. Utilisation d'un ou plusieurs antioxydants D), préférablement d'un ou plusieurs phénols stériquement encombrés, qui contiennent des structures de type 2,6-di-tert-butyl-4-méthylphénol, pour l'amélioration de l'adaptabilité de polyisocyanates contenant des groupes sulfonate dans des systèmes aqueux.
